# EUROPEAN PATENT APPLICATION

(11) **EP 4 572 082 A1**
(43) Date of publication of application: **18.06.2025**
(21) Application number: 24190638.7
(22) Date of filing: 24.07.2024
(51) Int. Cl.: H02J 7/00

(54) **CHARGING AND DISCHARGING CIRCUIT AND CONTROL METHOD THEREOF**

(30) Priority: 14.12.2023 US 202363610283 P; 14.05.2024 CN 202410594084
(71) Applicant: Delta Electronics, Inc., Taoyuan City 33370 (TW)
(72) Inventor: Chu, Tsen-En, 32063 Taoyuan City (TW); Chen, Che-Min, 32063 Taoyuan City (TW); Liu, Chien-Lung, 32063 Taoyuan City (TW)
(74) Representative: Uexküll & Stolberg

(57) **Abstract**

A charging and discharging circuit (9, 9a, 9b) and a control method of the charging and discharging circuit (9, 9a, 9b) are provided. When any one of the plurality of first DC/DC conversion circuit board modules (75) is discharging, the operation of the discharging load (77) is determined according to the charging requirement of the other first DC/DC conversion circuit board modules (75) for consuming the power or recycling energy. The charging and discharging circuit (9, 9a, 9b) determines the charging method according to the charging state of the first DC/DC conversion circuit board and the battery (2). Namely, according to the control method of the charging and discharging circuit (9, 9a, 9b) the charging state and the discharging state of the various batteries (2) are controlled according to the various requirements for distributing the power of the various batteries (2). The charging and discharging circuit (9, 9a, 9b) comprises a distribution panel (78) to enhance the heat dissipation efficiency.

## Description

### FIELD OF THE INVENTION

The present disclosure relates to charging and discharging, and more particularly to a charging and discharging circuit and a control method of the charging and discharging circuit.

### BACKGROUND OF THE INVENTION

The battery charging chamber includes a cover and a box. The cover is pivotally connected with the box. The box includes a recess for receiving the battery. The conventional battery charging chamber is served as a charging and discharging circuit. When the charging and discharging circuit charges or discharges a plurality of batteries, the charging and discharging circuit controls each battery in the same control method, resulting in decreasing the power efficiency and increasing the power consumption. Moreover, the conventional charging and discharging circuit continuously dissipates electronic power when the battery is discharged so as to waste the power of the battery. Furthermore, the conventional charging and discharging circuit has disadvantage of exceeding thermal energy in the circuit.

Therefore, there is a need of providing a charging and discharging circuit and a control method of the charging and discharging circuit to obviate the drawbacks encountered from the prior arts.

### SUMMARY OF THE INVENTION

The present disclosure provides a charging and discharging circuit and a control method of the charging and discharging circuit. According to the control method of the charging and discharging circuit of the present disclosure, when any one of the plurality of first DC/DC conversion circuit board modules is discharging, the operation of the discharging load is determined according to the charging requirement of the other first DC/DC conversion circuit board modules for consuming the power or recycling energy. Moreover, the charging and discharging circuit determines the charging method according to the charging state of the first DC/DC conversion circuit board and the battery. Namely, according to the control method of the charging and discharging circuit of the present disclosure, the charging state and the discharging state of the various batteries are controlled according to the various requirements for distributing the power of the various batteries. Moreover, the charging and discharging circuit of the present disclosure includes a distribution panel to enhance the heat dissipation efficiency.

In accordance with an aspect of the present disclosure, a control method of a charging and discharging circuit is provided. The control method of the charging and discharging circuit is configured to convert an AC power of an external wire to charge a plurality of batteries. The charging and discharging circuit includes a plurality of AC/DC circuit board modules, a human machine interface circuit module and a plurality of first DC/DC conversion circuit board modules. Each first DC/DC conversion circuit board module is connected between the corresponding AC/DC circuit board module and the corresponding battery. The control method includes the following steps. Firstly, a distribution panel is provided for dividing the AC power into a plurality of sub AC powers and distributing the sub AC powers to the corresponding AC/DC circuit board modules. Then, the plurality of first DC/DC conversion circuit board modules are controlled through the human machine interface circuit module to convert a first DC power provided by the corresponding AC/DC circuit board module into a charging power to charge the corresponding battery. Then, whether the first DC power provided by each AC/DC circuit board module is within a preset voltage range is confirmed. If the first DC power provided by each AC/DC circuit board module is not within a preset voltage range, an abnormal result is transmitted to the human machine interface circuit module. If the first DC power provided by each AC/DC circuit board module is within a preset voltage range, the corresponding first DC/DC conversion circuit board module is controlled to communicate with the corresponding battery through the human machine interface circuit module. Then, whether the battery is normal is confirmed. If the battery is abnormal, an abnormal result is transmitted to the human machine interface circuit module. If the battery is normal, the corresponding battery is charged by the corresponding first DC/DC conversion circuit board module in constant current mode or constant voltage mode. Then, a charging state of the corresponding first DC/DC conversion circuit board module is transmitted to the human machine interface circuit module. Then, whether a voltage of the battery has reached a threshold of a charging voltage is confirmed. If the voltage of the battery has not reached the charging threshold voltage, whether the corresponding AC/DC circuit board module receives a deactivated signal from the human machine interface circuit module is confirmed. If the corresponding AC/DC circuit board module receives the deactivated signal of the human machine interface circuit module provided by the user, an output power of the corresponding first DC/DC conversion circuit board module is deactivated.

In accordance with another aspect of the present disclosure, a control method of a charging and discharging circuit is provided. The control method of the charging and discharging circuit is configured to convert a DC power of a plurality of batteries. The charging and discharging circuit includes a plurality of AC/DC circuit board modules, a human machine interface circuit module, a plurality of first DC/DC conversion circuit board modules and a plurality of discharging loads. Each first DC/DC conversion circuit board module is connected between the corresponding AC/DC circuit board module and the corresponding battery. Each discharging load connected with a connection wire located between the corresponding AC/DC circuit board module and the corresponding first DC/DC conversion circuit board. The control method includes the following steps. Firstly, a distribution panel is provided for dividing an AC power of an external wire into a plurality of sub AC powers and distributing the sub AC powers to the corresponding AC/DC circuit board modules. Then, a chosen first DC/DC conversion circuit board module is controlled through the human machine interface circuit module to convert the DC power provided by the corresponding battery to a first DC power. Then, the chosen first DC/DC conversion circuit board module is controlled through the human machine interface circuit module to communicate with the corresponding battery to confirm a discharging state. Then, whether a voltage of the battery is within a preset voltage range is confirmed. If the voltage of the battery is not within the voltage range, an abnormal result is transmitted to the human machine interface circuit module. If the voltage of the battery is within the voltage range, the DC power provided by the battery is continuously converted to the first DC power by the chosen first DC/DC conversion circuit board module. Then, whether the first DC power converted by the first DC/DC conversion circuit module is within the voltage range is confirmed. If the first DC power converted by the first DC/DC conversion circuit module is within the voltage range, whether the first DC/DC conversion circuit board module is to charge the other batteries is confirmed. If the first DC/DC conversion circuit board module does not charge the other batteries, the discharging load is controlled to be activated, so that the first DC power converted by the first DC/DC conversion circuit board module is continuously supplied to the discharging load. Then, whether the voltage of the battery has reached a preset discharging voltage is confirmed. If the voltage of the battery has not reached the preset discharging voltage, whether the chosen first DC/DC circuit module receives a deactivated signal from the human machine interface circuit module is confirmed. If the chosen first DC/DC circuit module receives the deactivated signal from the human machine interface circuit module, an output power of the first DC/DC conversion circuit board module is deactivated.

In accordance with another aspect of the present disclosure, a charging and discharging circuit is provided. The charging and discharging circuit converts an AC power of an external wire to charge a plurality of batteries or converts a DC power of a plurality of batteries. The charging and discharging circuit includes a distribution panel, a plurality of AC/DC circuit board modules, a plurality of first DC/DC conversion circuit board modules, a human machine interface circuit module, a plurality of discharging loads and a control circuit board module. The distribution panel is configured to divide the AC power into a plurality of sub AC powers. The plurality of AC/DC circuit board modules are connected with the distribution panel. Each of plurality of the AC/DC circuit board modules receives the corresponding sub AC power individually. Each of the plurality of first DC/DC conversion circuit board modules is connected between the corresponding AC/DC circuit board module and the corresponding battery. The human machine interface circuit module is configured to transmit instructions to order the first DC/DC conversion circuit board modules to convert a first DC power provided by the corresponding AC/DC circuit board module into a charging power to charge the corresponding battery, or order a chosen first DC/DC conversion circuit board module to convert the DC power provided by the corresponding battery to a first DC power. Each of the plurality of discharging loads is connected with a connection wire located between the corresponding AC/DC circuit board module and the corresponding first DC/DC conversion circuit board module. The control circuit board module receives the first DC power provided by at least one of the plurality of AC/DC circuit board modules and converts the first DC power to a required DC output power.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic view illustrating the close operation of a battery charging chamber of the present disclosure;
FIG. 2 is a schematic view illustrating the open operation of the battery charging chamber of FIG. 1;
FIG. 3 is a schematic exploded view illustrating the components of a box of the battery charging chamber of FIG. 1;
FIG. 4 is a schematic exploded view illustrating the components of a cover of the battery charging chamber of FIG. 1;
FIG. 5 is a schematic equivalent circuit diagram illustrating a charging and discharging circuit served as the battery charging chamber according to a first embodiment of the present disclosure;
FIGS. 6A and 6B are flowcharts illustrating a control method of the charging and discharging circuit of FIG. 5 when the charging and discharging circuit is charging;
FIGS. 7A and 7B are flowcharts illustrating a control method of the charging and discharging circuit of FIG. 5 when the charging and discharging circuit is discharging;
FIG. 8 is a flowchart illustrating a control method of the charging and discharging circuit of FIG. 5 when a control circuit board module is charging;
FIG. 9 is a schematic equivalent circuit diagram illustrating a charging and discharging circuit served as the battery charging chamber according to a second embodiment of the present disclosure;
FIG. 10 is a schematic equivalent circuit diagram illustrating a charging and discharging circuit served as the battery charging chamber according to a third embodiment of the present disclosure;
FIG. 11 is a flowchart illustrating a control method of a first DC/DC conversion circuit module of the charging and discharging circuit of FIG. 10;
FIG. 12 is a schematic equivalent circuit diagram illustrating a charging and discharging circuit served as the battery charging chamber according to a fourth embodiment of the present disclosure;
FIG. 13 is a flowchart illustrating a control method of the charging and discharging circuit of FIG. 12 when the charging and discharging circuit is charging; and
FIG. 14 is a flowchart illustrating a control method of a discharging load of the charging and discharging circuit of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

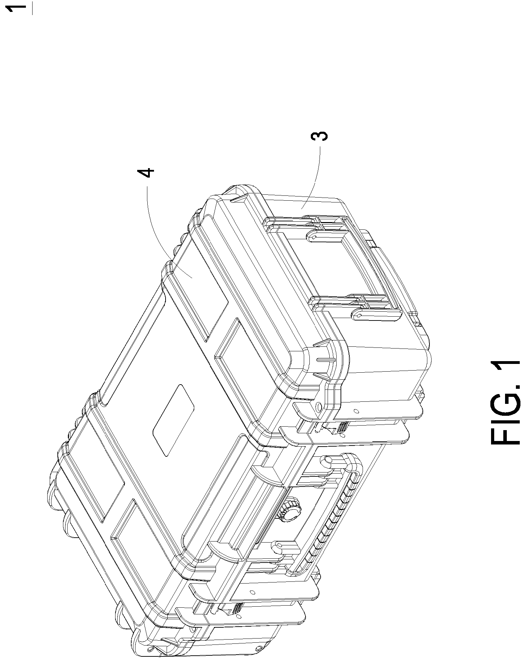

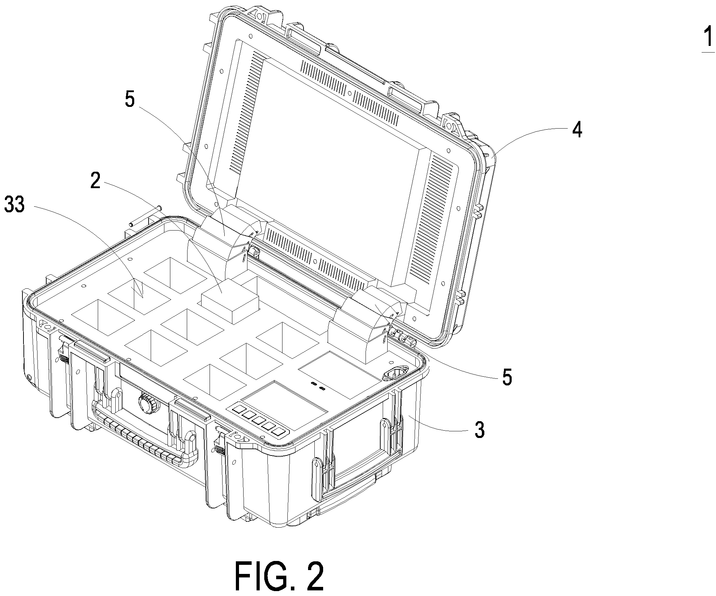

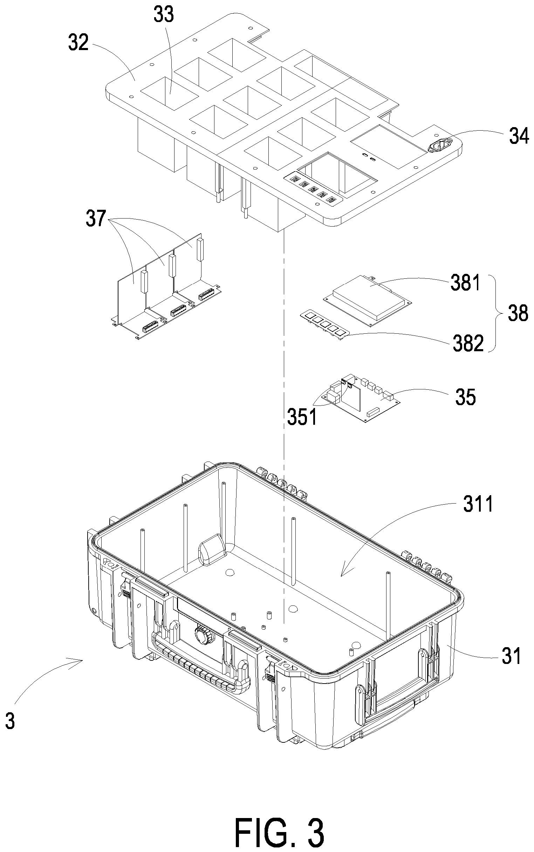

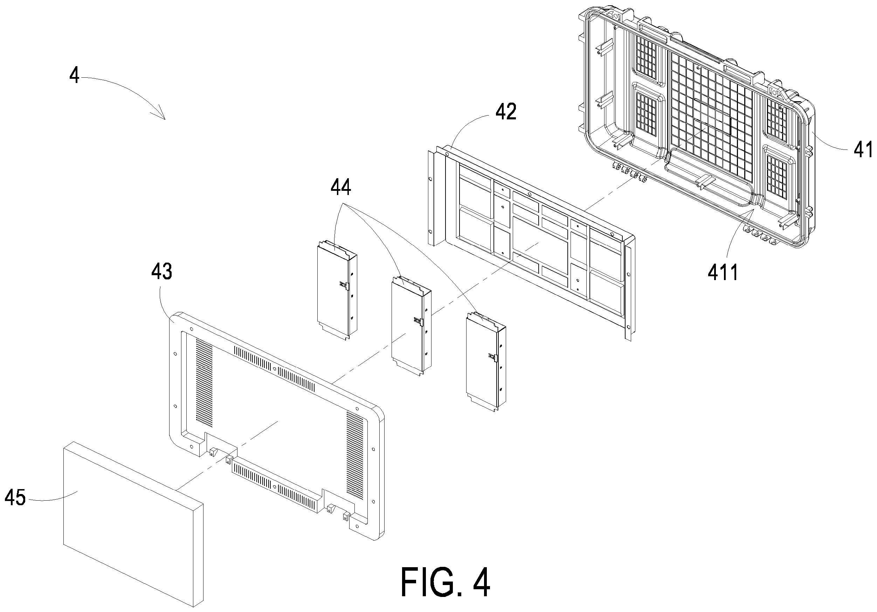

FIG. 1 is a schematic view illustrating the close operation of a battery charging chamber of the present disclosure. FIG. 2 is a schematic view illustrating the open operation of the battery charging chamber of FIG. 1. FIG. 3 is a schematic exploded view illustrating the components of a box of the battery charging chamber of FIG. 1. FIG. 4 is a schematic exploded view illustrating the components of a cover of the battery charging chamber of FIG. 1. As shown in FIG. 2, the battery charging chamber 1 charges the battery 2. In this embodiment, only one battery 2 is shown in FIG. 2. Certainly, the battery charging chamber 1 can receive more batteries 2, so that a plurality of batteries can be charged by the battery charging chamber 1 at the same time. The battery charging chamber 1 includes a box 3, a cover 4 and two connectors 5. When the battery charging chamber 1 is in the close operation, as shown in FIG. 1, the cover 4 covers the box 3 of the battery charging chamber 1 so as to cover the battery 2 disposed in the box 3. When the battery charging chamber 1 is in the open operation, as shown in FIG. 2, the cover 4 of the battery charging chamber 1 is pivotally connected with the box 3 through the two connectors 5, so that the cover 4 uncovers the box 3 so as to expose the battery 2. As shown in FIG. 3, the box 3 includes a first casing 31, a chassis 32, a plurality of receiving recesses 33, an input terminal 34, an AC circuit board 35, a plurality of DC/DC conversion modules 37 and a control panel 38.

As shown in FIGS. 2 and 3, the first casing 31 includes a first main accommodation space 311 having an opening. The chassis 32 is disposed in the first main accommodation space 311 of the first casing 31 and covers the opening of the first main accommodation space 311. Each receiving recess 33 is concaved from the upper surface of the chassis 32 toward the bottom of the first casing 31. Each receiving recess 33 is disposed in the first main accommodation space 311 of the first casing 31 for receiving the corresponding battery 2. In this embodiment, the number of the receiving recesses 33 is nine. The nine receiving recesses 33 are arranged in three rows and three columns. As shown in FIG. 2, the battery 2 is disposed in the receiving recess 33 located in the first row and the second column.

The input terminal 34 is disposed on the chassis 32 for connecting and receiving the AC power provided by the external wire (not shown). The AC circuit board 35 is a control circuit board with USB Type-C connection functionality and disposed in the first main accommodation space 311 of the first casing 31. In this embodiment, the AC circuit board 35 includes two output power sockets 351. The output power socket 351 is a socket with USB type-C. The output power socket 351 is connected with the external electronic component and charging the external electronic component. Each DC/DC conversion module 37 is arranged in the bottom of the first casing 31 and disposed in the first main accommodation space 311 of the first casing 31. Each DC/DC conversion module 37 is arranged between the receiving recess 33 located in the first column and the receiving recess 33 located in the second column. For example, the first DC/DC conversion module 37 is disposed between the receiving recess 33 located in the first row and the first column and the receiving recess 33 located in the first row and the second column. The second DC/DC conversion module 37 is disposed between the receiving recess 33 located in the second row and the first column and the receiving recess 33 located in the second row and the second column. The third DC/DC conversion module 37 is disposed between the receiving recess 33 located in the third row and the first column and the receiving recess 33 located in the third row and the second column. The output terminal of each DC/DC conversion module 37 is penetrated through the side wall of the corresponding receiving recess 33 located in the first column and the side wall of the corresponding receiving recess 33 located in the second column so as to connect the battery 2 disposed in the corresponding receiving recess 33 for transmitting power to the corresponding battery 2. Namely, the DC/DC conversion module 37 only charges the batteries 2 disposed in the receiving recess 33 located in the first column and the second column, but not charge the batteries 2 disposed in the receiving recess 33 located in the third column. The control panel 38 is disposed on the chassis 32 and disposed in the first main accommodation space 311 of the first casing 31. The control panel 38 includes a monitor 381 and a human machine interface circuit module 382. The monitor 381 shows the state of the battery charging chamber 1 or the state of the battery 2 disposed in the battery charging chamber 1. The human machine interface circuit module 382 is used to control the charging or discharging operation by the user.

As shown in FIG. 4, the cover 4 includes a second casing 41, a first plate 42, a second plate 43, a plurality of AC/DC conversion modules 44 and a fixing foam 45. The second casing 41 of the cover 4 is pivotally connected with the first casing 31 of the box 3 through the two connectors 5, as shown in FIG. 2. As shown in FIG. 4, the second casing 41 includes a second main accommodation space 411. The first plate 42, the plurality of AC/DC conversion modules 44, the second plate 43 and the fixing foam 45 are arranged in the second main accommodation space 411 of the second casing 41 in sequence. The first plate 42 is made of metal, disposed on the bottom of the second casing 41 and disposed in the second main accommodation space 411 of the second casing 41. The second plate 43 is disposed in the second main accommodation space 411 of the second casing 41. The first plate 42 is disposed between the second plate 43 and the bottom of the second casing 41. The AC/DC conversion module 44 is served as the power supply circuit board of the battery charging chamber 1 and disposed between the first plate 42 and the second plate 43. In this embodiment, the number of the AC/DC conversion module 44 is three. The fixing foam 45 is disposed in one side of the second plate 43 away from the AC/DC conversion module 44 for fixing the battery 2 disposed in the box 3 when the box 3 covered by the cover 4 of the battery charging chamber 1.

As shown in FIGS. 1 and 2, the connector 5 is connected with one side of the box 3 and one side of the cover 4. The cover 4 is rotated relative to the connector 5, so that the cover 4 selectively covers or uncovers the box 3. When the battery charging chamber 1 is in the close operation, as shown in FIG. 1, the cover 4 is rotated relative to the connector 5 so as to cover the box 3. When the battery 2 needs to be charged by the battery charging chamber 1 and the battery charging chamber 1 is in the open operation, as shown in FIG. 2, the cover 4 is rotated relative to the connector 5 so as to uncover the box 3, so that the receiving recess 33 is exposed to receive the battery 2.

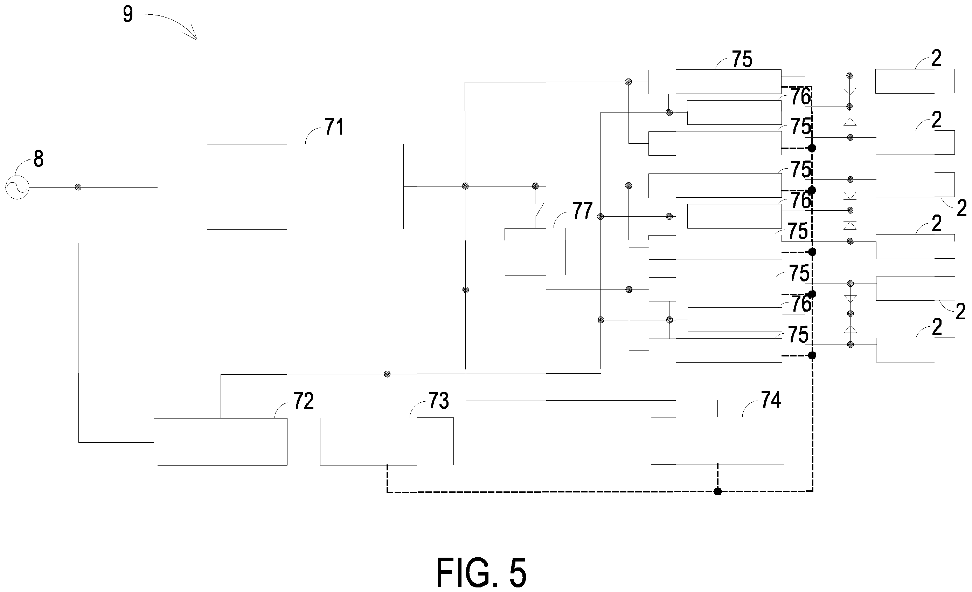

FIG. 5 is a schematic equivalent circuit diagram illustrating a charging and discharging circuit served as the battery charging chamber according to a first embodiment of the present disclosure. In circuit structure, a portion of electronic components of the battery charging chamber as shown in FIGS. 1 to 4 is served as a charging and discharging circuit. As shown in FIGS. 1, 4 and 5, the charging and discharging circuit 9 includes an AC/DC circuit board module 71, a small power module 72, a human machine interface circuit module 73, a control circuit board module 74, a plurality of first DC/DC conversion circuit board modules 75, a plurality of second DC/DC conversion circuit board modules 76 and a discharging load 77. The AC/DC circuit board module 71 is served as the AC/DC conversion modules 44 as shown in FIG. 4. The AC/DC circuit board module 71 receives the AC power provided by the external wire 8 and converts the AC power to a first DC power. The rated power provided by the AC/DC circuit board module 71 is 760W. The first DC power converted by the AC/DC circuit board module 71 is 29V. The small power module 72 is served as the AC circuit board 35 as shown in FIG. 3. The small power module 72 receives the AC power provided by the external wire 8 and converts the AC power to a second DC power. The second DC power converted by the small power module 72 is 12V The human machine interface circuit module 73 is served as the control panel 38 as shown in FIG. 3. The human machine interface circuit module 73 selectively receives a signal or outputs a signal according to the requirement of the user. The control circuit board module 74 is also served as the AC circuit board 35 as shown in FIG. 3. The control circuit board module 74 receives the first DC power provided by the AC/DC circuit board module 71, and converts the first DC power to the required DC output power required by the output power sockets 351 of the AC circuit board 35. The control circuit board module 74 is signally communicated with the human machine interface circuit module 73. The plurality of first DC/DC conversion circuit board module 75 and the plurality of second DC/DC conversion circuit board modules 76 are served as the plurality of DC/DC conversion modules 37 as shown in FIG. 3. As shown in FIG. 3, the plurality of first DC/DC conversion circuit board modules 75 and the plurality of second DC/DC conversion circuit board modules 76 are integrated in the DC/DC conversion module 37 and disposed between the two receiving recesses 33 so as to save space. In the embodiment, the number of the first DC/DC conversion circuit module 75 is equal to the number of the battery 2 disposed in the battery charging chamber 1. Namely, the number of the first DC/DC conversion circuit board module 75 is six. Each first DC/DC conversion circuit module 75 receives and converts the first DC power provided by the AC/DC circuit board module 71 to charge the corresponding battery 2. Alternatively, each first DC/DC conversion circuit module 75 receives and converts the power provided by the corresponding battery 2 to the first DC power. In this embodiment, the first DC/DC conversion circuit module 75 is connected with the human machine interface circuit module 73 and the control circuit board module 74 through the communication wire (i.e., the dotted line as shown in FIG. 5) for exchanging the date information. In this embodiment, the number of the second DC/DC conversion circuit board module 76 is equal to half of the number of the battery 2 disposed in the battery charging chamber 1. Namely, the number of the second DC/DC conversion circuit board module 76 is three. One end of each second DC/DC conversion circuit board module 76 is connected with the small power module 72 and the human machine interface circuit module 73. The other end of each second DC/DC conversion circuit board module 76 is connected with the two corresponding batteries 2. The second DC/DC conversion circuit board module 76 receives and converts the power provided by the battery 2 to the small power module 72 and the human machine interface circuit module 73. Namely, when the external wire 8 cannot provide the AC power to the small power module 72 and the human machine interface circuit module 73, the second DC/DC conversion circuit board module 76 utilizes the alternative power to charge the small power module 72 and the human machine interface circuit module 73. The discharging load 77 is served as the switches and resistors collaboratively, and connected with the wire located between the AC/DC circuit board module 71 and the first DC/DC conversion circuit module 75. When the battery 2 needs to charge the component, the discharging load 77 is activated to dissipate the power, and the control method is described below.

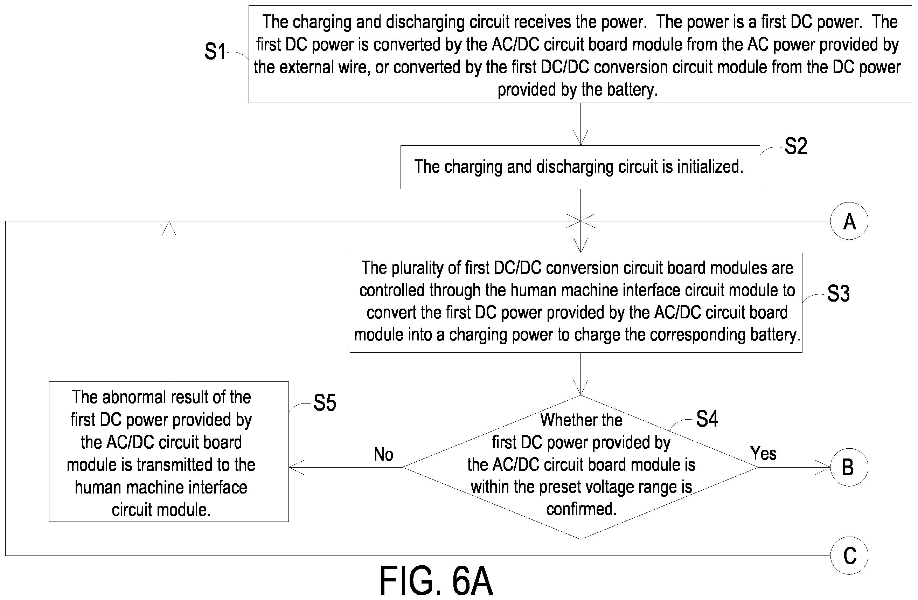

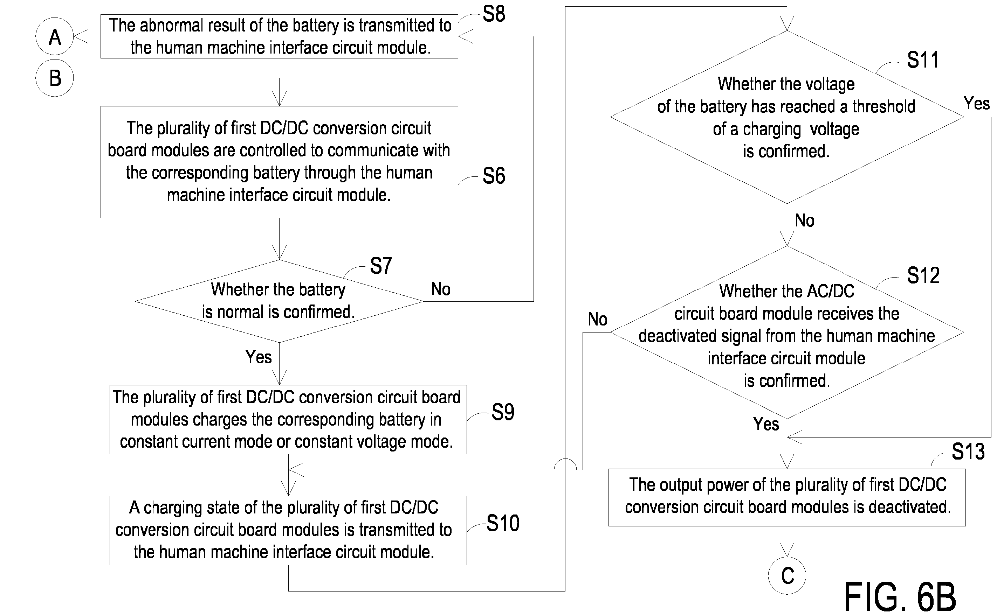

FIGS. 6A and 6B are flowcharts illustrating a control method of the charging and discharging circuit of FIG. 5 when the charging and discharging circuit is charging. As shown in FIGS. 5, 6A and 6B, a step S1 is performed. In the step S1, the charging and discharging circuit 9 receives the power. The power is a first DC power. The first DC power is converted by the AC/DC circuit board module 71 from the AC power provided by the external wire 8, or converted by the first DC/DC conversion circuit module 75 from the DC power provided by the battery 2. Then, a step S2 is performed. In the step S2, the charging and discharging circuit 9 is initialized. In this step, the power received by the charging and discharging circuit 9 (i.e., the AC power received by the charging and discharging circuit 9), the human machine interface circuit module 73 and the plurality of first DC/DC conversion circuit board modules 75 are initialized. Then, a step S3 is performed. In the step S3, the plurality of first DC/DC conversion circuit board modules 75 are controlled through the human machine interface circuit module 73 to convert the first DC power provided by the AC/DC circuit board module 71 into a charging power to charge the corresponding battery 2. Then, a step S4 is performed. In the step S4, whether the first DC power provided by the AC/DC circuit board module 71 is within the preset voltage range is confirmed. If the step S4 is not satisfied, it means that the first DC power provided by the AC/DC circuit board module 71 is not within the preset voltage range. Then, a step S5 is performed. In the step S5, the abnormal result of the first DC power provided by the AC/DC circuit board module 71 is transmitted to the human machine interface circuit module 73. Then, the step S3 is performed again. If the step S4 is satisfied, it means that the first DC power provided by the AC/DC circuit board module 71 is within the preset voltage range. Then, a step S6 is performed. In the step S6, the plurality of first DC/DC conversion circuit board modules 75 are controlled to communicate with the corresponding battery 2 through the human machine interface circuit module 73. Then, a step S7 is performed. In the step S7, whether the battery 2 is normal is confirmed. If the step S7 is not satisfied, it means that the battery 2 is abnormal. Then, a step S8 is performed. In the step S8, the abnormal result of the battery 2 is transmitted to the human machine interface circuit module 73. Then, the step S3 is performed again. If the step S7 is satisfied, it means that the battery 2 is normal. Then, a step S9 is performed. In the step S9, the plurality of first DC/DC conversion circuit board modules 75 charges the corresponding battery 2 in constant current mode or constant voltage mode. Then, a step S10 is performed. In the step S10, a charging state of the plurality of first DC/DC conversion circuit board modules 75 is transmitted to the human machine interface circuit module 73. Then, a step S11 is performed. In the step S11, whether the voltage of the battery 2 has reached a threshold of a charging voltage is confirmed. Namely, whether the battery 2 is fully charged is confirmed. If the step S11 is not satisfied, it means that the voltage of the battery 2 has not reached the threshold of the charging voltage. Then, a step S12 is performed. In the step S12, whether the AC/DC circuit board module 71 receives the deactivated signal from the human machine interface circuit module 73 is confirmed. If the step S12 is not satisfied, it means that the AC/DC circuit board module 71 does not receive the deactivated signal from the human machine interface circuit module 73. Then, the step S10 is performed again. If the step S12 is satisfied, it means that the AC/DC circuit board module 71 receives the deactivated signal from the human machine interface circuit module 73. Then, a step S13 is performed. In the step S13, the output power of the plurality of first DC/DC conversion circuit board modules 75 is deactivated. Then, the step S3 is performed again. If the step S11 is satisfied, it means that the voltage of the battery 2 has reached the threshold of the charging voltage. Then, the step S13 is performed.

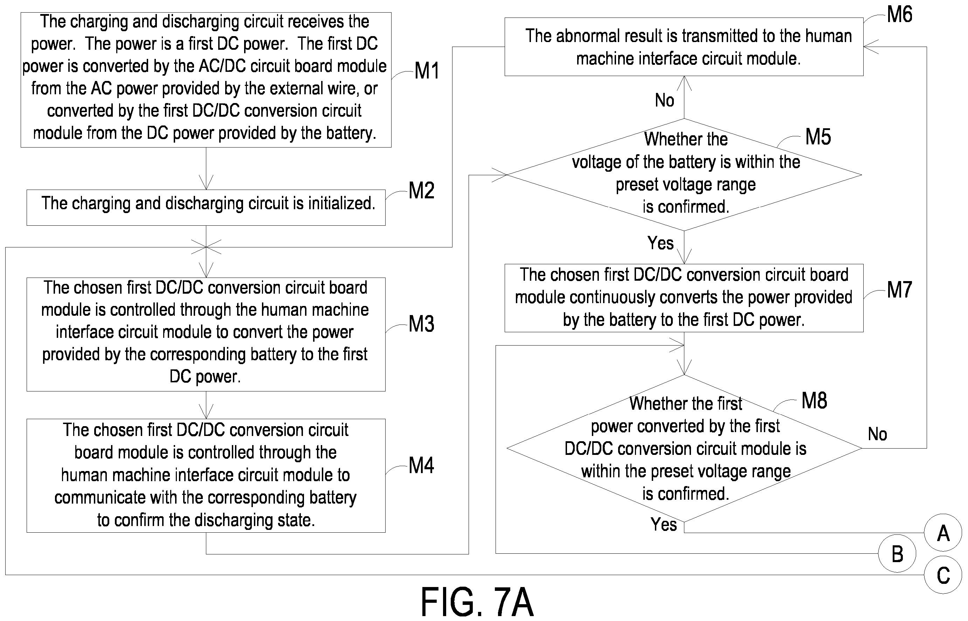

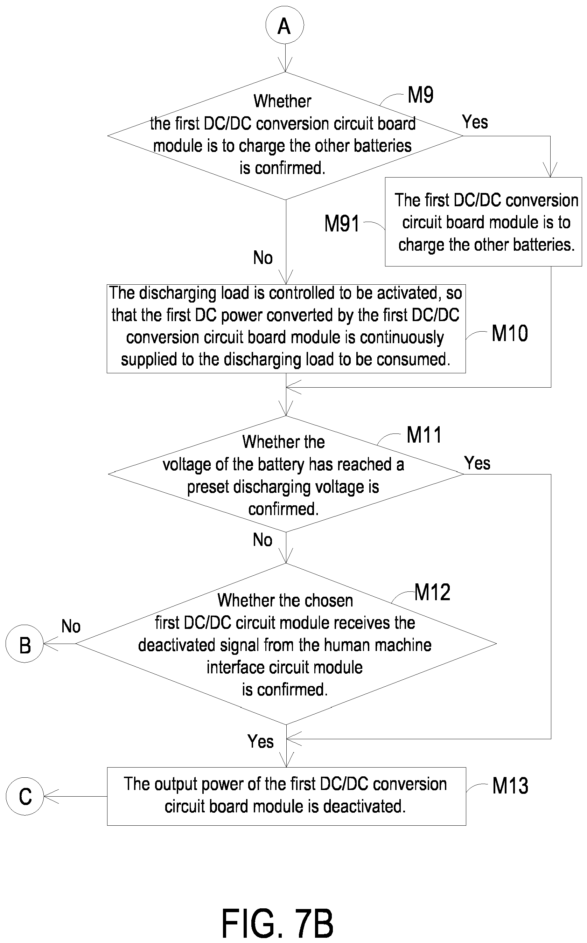

FIGS. 7A and 7B are flowcharts illustrating a control method of the charging and discharging circuit of FIG. 5 when the charging and discharging circuit is discharging. As shown in FIGS. 5, 7A and 7B, a step M1 is performed. In the step M1, the charging and discharging circuit 9 receives the power. The power is a first DC power. The first DC power is converted by the AC/DC circuit board module 71 from the AC power provided by the external wire 8, or converted by the first DC/DC conversion circuit module 75 from the DC power provided by the battery 2. Then, a step M2 is performed. In the step M2, the charging and discharging circuit 9 is initialized. In this step, the human machine interface circuit module 73, the control circuit board module 74, and the plurality of first DC/DC conversion circuit board modules 75 are initialized. Then, a step M3 is performed. In the step M3, the chosen first DC/DC conversion circuit board module 75 is controlled through the human machine interface circuit module 73 to convert the power provided by the corresponding battery 2 to the first DC power. Then, a step M4 is performed. In the step M4, the chosen first DC/DC conversion circuit board module 75 is controlled through the human machine interface circuit module 73 to communicate with the corresponding battery 2 to confirm the discharging state. Then, a step M5 is performed. In the step M5, whether the voltage of the battery 2 is within the preset voltage range is confirmed. If the step M5 is not satisfied, it means that the voltage of the battery 2 is not within the preset voltage range. Then, a step M6 is performed. In the step M6, the abnormal result is transmitted to the human machine interface circuit module 73. Then, the step M3 is performed again. If the step M5 is satisfied, it means that the voltage of the battery 2 is within the preset voltage range. Then, a step M7 is performed. In the step M7, the chosen first DC/DC conversion circuit board module 75 continuously converts the power provided by the battery 2 to the first DC power. Then, a step M8 is performed. In the step M8, whether the first power converted by the first DC/DC conversion circuit module 75 is within the preset voltage range is confirmed. If the step M8 is not satisfied, it means that the first power converted by the first DC/DC conversion circuit module 75 is not within the preset voltage range. Then, the step M6 is performed again. If the step M8 is satisfied, it means that the first power converted by the first DC/DC conversion circuit module 75 is within the preset voltage range. Then, a step M9 is performed. In the step M9, whether the first DC/DC conversion circuit board module 75 is to charge the other batteries 2 is confirmed. If the step M9 is not satisfied, it means that the first DC/DC conversion circuit board module 75 is not to charge the other batteries 2. Then, a step M10 is performed. In the step M10, the discharging load 77 is controlled to be activated, so that the first DC power converted by the first DC/DC conversion circuit board module 75 is continuously supplied to the discharging load 77 to be consumed. Then, a step M11 is performed. In the step M11, whether the voltage of the battery 2 has reached a preset discharging voltage is confirmed. If the step M11 is not satisfied, it means that the voltage of the battery 2 has not reached the preset discharging voltage. Then, a step M12 is performed. In the step M12, whether the chosen first DC/DC circuit module 75 receives the deactivated signal from the human machine interface circuit module 73 is confirmed. If the step M12 is satisfied, it means that the chosen first DC/DC circuit module 75 receives the deactivated signal from the human machine interface circuit module 73. Then, a step M13 is performed. In the step M13, the output power of the first DC/DC conversion circuit board module 75 is deactivated. If the step M12 is not satisfied, it means that the chosen first DC/DC circuit module 75 does not receive the deactivated signal from the human machine interface circuit module 73. Then, the step M8 is performed again. If the step M9 is satisfied, it means that the first DC/DC conversion circuit board module 75 is to charge the other batteries 2. Then, a step M91 is performed. In the step M91, the first DC/DC conversion circuit board module 75 is to charge the other batteries 2. Then, the step M11 is performed. If the step M11 is satisfied, it means that the voltage of the battery 2 has reached the preset discharging voltage. Then, the step M13 is performed.

According to the control method of this embodiment, when any one of the plurality of first DC/DC conversion circuit board modules 75 of the charging and discharging circuit 9 is discharging and none of the other first DC/DC conversion circuit board modules 75 needs to be charged, the discharging load 77 of the charging and discharging circuit 9 is activated. The first DC power converted by the chosen first DC/DC conversion circuit board module 75 is continuously supplied to the discharging load 77 to be consumed. When the other first DC/DC conversion circuit board modules 75 needs to be charged, the discharging load 77 of the charging and discharging circuit 9 is deactivated. Namely, the discharging load 77 is turned off. The first DC power converted by the chosen first DC/DC conversion circuit board module 75 charges the first DC/DC conversion circuit board module 75 needed to be charged for recycling the power. According to the control method of FIGS. 6A, 6B, 7A and 7B, the charging and discharging circuit 9 controls various batteries 2 to charge or discharge correspondingly according to the various requirements for distributing the power to the battery 2.

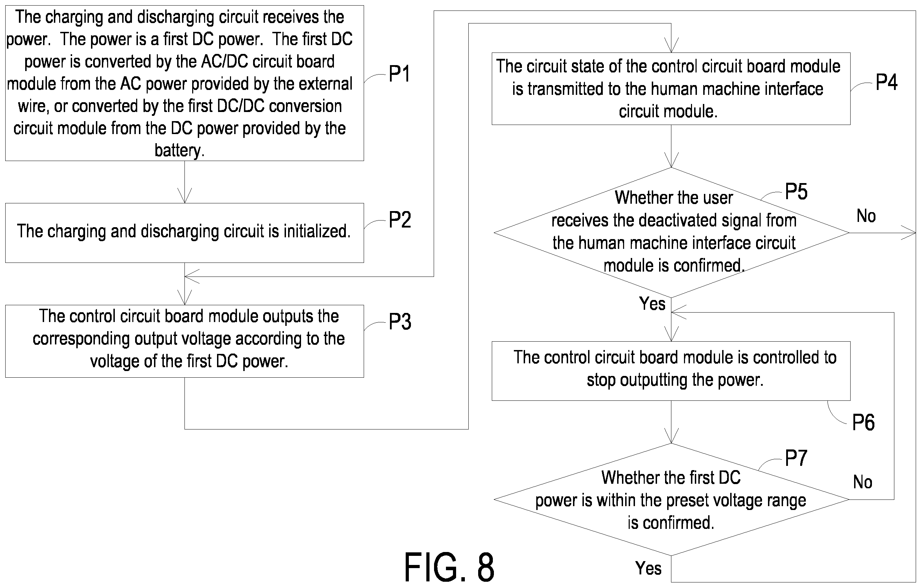

FIG. 8 is a flowchart illustrating a control method of the charging and discharging circuit of FIG. 5 when a control circuit board module is charging. As shown in FIGS. 5 and 8, a step P1 is performed. In the step P1, the charging and discharging circuit 9 receives the power. The power is a first DC power. The first DC power is converted by the AC/DC circuit board module 71 from the AC power provided by the external wire 8, or converted by the first DC/DC conversion circuit module 75 from the DC power provided by the battery 2. Then, a step P2 is performed. In the step P2, the charging and discharging circuit 9 is initialized. In this step, the control circuit board module 74, and the plurality of first DC/DC conversion circuit board modules 75 are initialized. Then, a step P3 is performed. In the step P3, the control circuit board module 74 outputs the corresponding output voltage according to the voltage of the first DC power. For example, when the voltage of the first DC power is 29V, the output voltage of the control circuit board module 74 is ranged within 5 to 20 V. When the voltage of the first DC power is 17V, the output voltage of the control circuit board module 74 is ranged within 5 to 15 V Then, a step P4 is performed. In the step P4, the circuit state of the control circuit board module 74 is transmitted to the human machine interface circuit module 73. Then, a step P5 is performed. In the step P5, whether the user receives the deactivated signal from the human machine interface circuit module 73 is confirmed. If the step P5 is not satisfied, it means that the user does not receive the deactivated signal from the human machine interface circuit module 73. Then, the step P3 is performed again. If the step P5 is satisfied, it means that the user receives the deactivated signal from the human machine interface circuit module 73. Then, a step P6 is performed. In the step P6, the control circuit board module 74 is controlled to stop outputting the power. Then, a step P7 is performed. In the step P7, whether the first DC power is within the preset voltage range is confirmed. If the step P7 is satisfied, it means that the first DC power is within the preset voltage range. Then, the step P3 is performed again. If the step P7 is not satisfied, it means that the first DC power is not within the preset voltage range. Then, the step P6 is performed again. According to the above control method, the charging and discharging circuit 9 not only charges and discharges the battery 2, but charges the other components by utilizing the control circuit board module 74. The control circuit board module 74 changes its output voltage according to various input voltages to supply power based on various requirements.

According to FIG. 5, all first DC/DC conversion circuit board module 75 of the charging and discharging circuit 9 are connected in parallel and shares a common voltage. By distributing and controlling the power of the charging and discharging circuit 9 according to the control method of FIGS. 6A to 8, the high-power-request batteries 2 can be rapidly charged while other batteries 2 are charged with the remaining power.

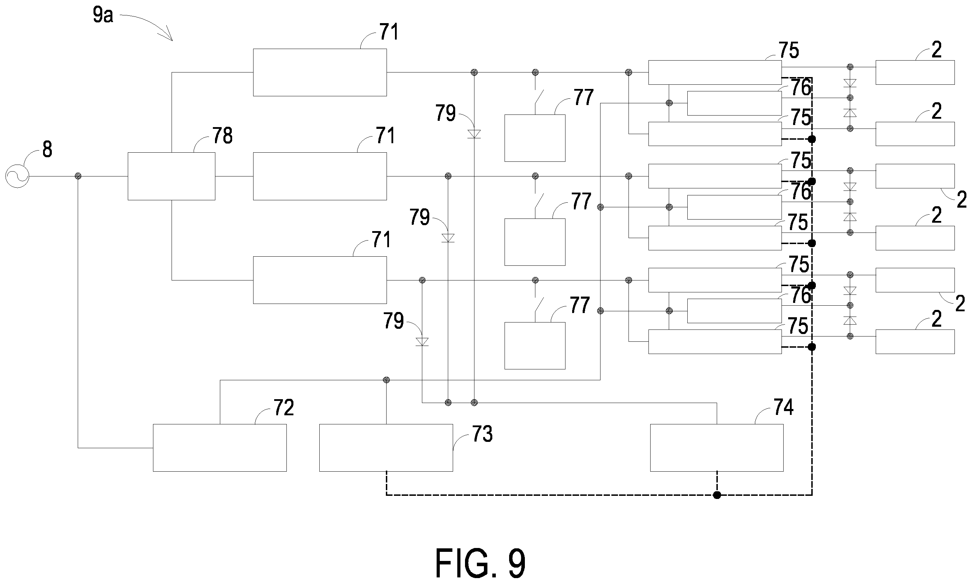

FIG. 9 is a schematic equivalent circuit diagram illustrating a charging and discharging circuit served as the battery charging chamber according to a second embodiment of the present disclosure. In comparison with the charging and discharging circuit 9 as shown in FIG. 5, the charging and discharging circuit 9a of this embodiment further includes a distribution panel 78. The distribution panel 78 is disposed between the external wire 8 and the plurality of AC/DC circuit board modules 71 for dividing the AC power provided by the external wire 8 into three sub AC powers and distributing the three sub AC powers to the corresponding AC/DC circuit board module 71, respectively. Moreover, the charging and discharging circuit 9 of FIG. 5 only includes a single AC/DC circuit board module 71. Compared with the charging and discharging circuit 9 of FIG. 5, the charging and discharging circuit 9a of this embodiment includes three AC/DC circuit board modules 71. Each AC/DC circuit board module 71 receives and converts the corresponding sub AC power to charge the two corresponding first DC/DC conversion circuit board modules 75 and the corresponding second DC/DC conversion circuit board module 76. The rated power provided by each AC/DC circuit board module 71 is 300W. Moreover, the charging and discharging circuit 9 of FIG. 5 only includes a single discharging load 77. Compared with the charging and discharging circuit 9 of FIG. 5, the charging and discharging circuit 9a of this embodiment includes three discharging loads 77. Each discharging load 77 is connected with the wire located between the corresponding AC/DC circuit board module 71 and the corresponding first DC/DC conversion circuit board module 75. In this embodiment, the charging and discharging circuit 9a includes three diodes 79. The anode of each diode 79 is connected with the wire located between the corresponding AC/DC circuit board module 71 and the corresponding first DC/DC conversion circuit board module 75. The cathode of each diode 79 is connected with the control circuit board module 74 for charging the control circuit board module 74 according to the voltage difference between the wire and the control circuit board module 74. Namely, the charging and discharging circuit 9a of this embodiment includes three-phase conversion circuit. Each phase conversion circuit includes one AC/DC circuit board module 71, two corresponding first DC/DC conversion circuit board modules 75, one corresponding second DC/DC conversion circuit board module 76, one corresponding discharging load 77 and one corresponding diode 79. Certainly, each phase conversion circuit of the charging and discharging circuit 9a of this embodiment is controlled to be charged or discharged utilizing the control method of FIGS. 6A to 8. Using the distribution board 78 into the charging and discharging circuit 9a of this embodiment can enhance the heat dissipation efficiency. In this embodiment, the two batteries 2 utilizing the same phase conversion circuit can be charged and discharged with each other. For example, in any one of the three-phase conversion circuit, the power provided by one battery 2 can be recharged to the other batteries 2 for saving energy. Moreover, in this embodiment, if the electronic component of any one of the three-phase conversion circuit is damaged, the other one of the three-phase conversion circuit is still able to operate, so that the whole charging and discharging circuit 9a is still able to operate normally.

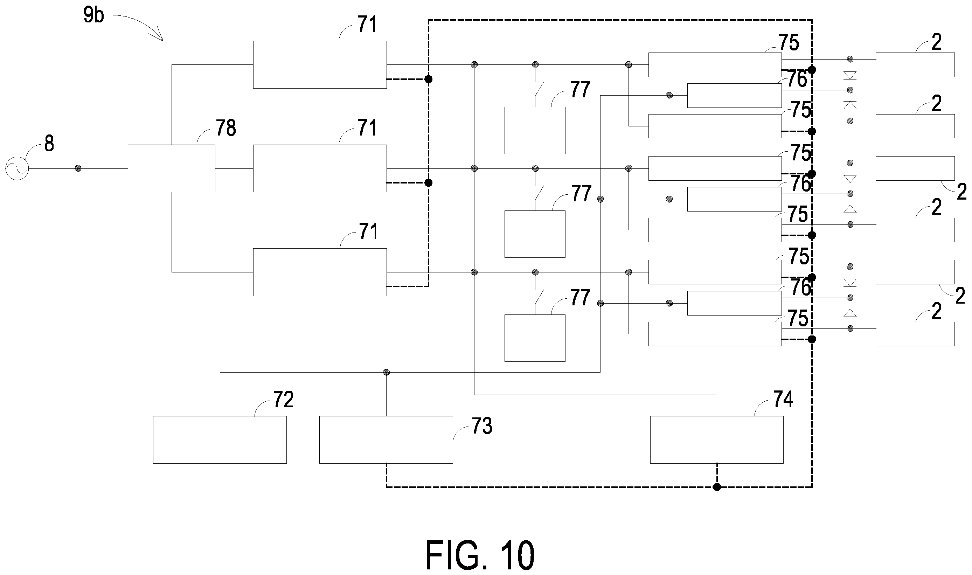

FIG. 10 is a schematic equivalent circuit diagram illustrating a charging and discharging circuit served as the battery charging chamber according to a third embodiment of the present disclosure. In comparison with the charging and discharging circuit 9a as shown in FIG. 9, the output terminals of all AC/DC circuit board modules 71 and the output terminals of all first DC/DC conversion circuit board modules 75 of the charging and discharging circuit 9b of this embodiment are connected with each other through the communication wire (i.e., the dotted line as shown in FIG. 10). The AC/DC circuit board modules 71 and the first DC/DC conversion circuit board modules 75 are communicated with each other through the current information with the communication protocol. The charging and discharging circuit 9b controls the output current according to the current information for equalizing the current. Similar to the charging and discharging circuit 9a of FIG. 9, the charging and discharging circuit 9b of this embodiment includes three-phase conversion circuit. Certainly, each phase of the three-phase conversion circuit of the charging and discharging circuit 9b of this embodiment is controlled to be charged or discharged utilizing the control method of FIGS. 6A to 8. Using the distribution board 78 into the charging and discharging circuit 9b of this embodiment can enhance the heat dissipation efficiency. Moreover, the charging and discharging circuit 9b of this embodiment equalizes the current, so that the charging and discharging circuit 9b distributes the power of the battery 2 by switching the current direction of the first DC/DC conversion circuit module 75 of each phase of the three-phase conversion circuit. For example, the discharge battery 2 charges the other batteries 2 by switching the current direction of the first DC/DC conversion circuit module 75. Moreover, if the electronic component of any one of the AC/DC circuit board modules 71 is damaged, the other normal AC/DC circuit board modules 71 can distribute the power to all the first DC/DC conversion circuit module 75 through the control of the human machine interface circuit module 73 for maintaining the operation of the charging and discharging circuit 9b.

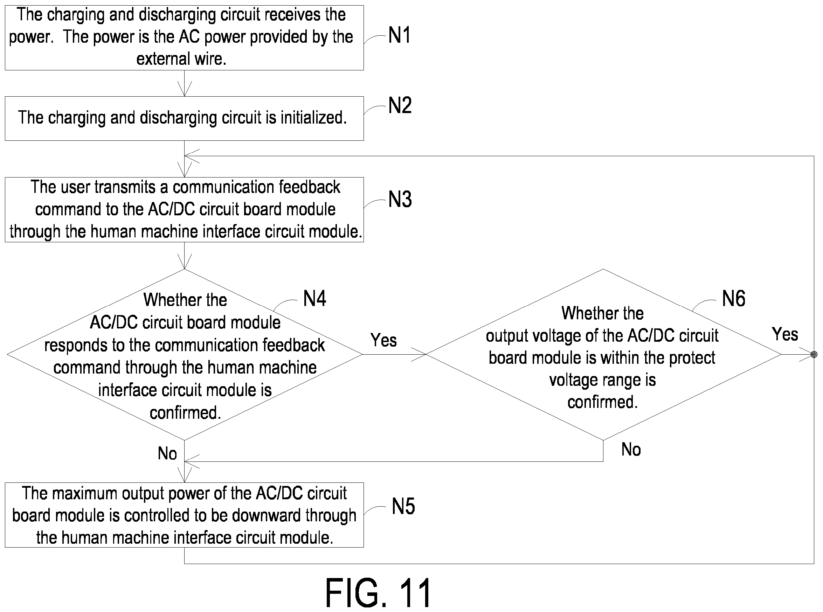

In some embodiments, the charging and discharging circuit 9b of this embodiment can be charged and discharged utilizing the control method in FIGS. 6A to 8, and the operation of the first DC/DC conversion circuit board 75 can be controlled according to the state of the AC/DC circuit board module 71. FIG. 11 is a flowchart illustrating a control method of a first DC/DC conversion circuit module of the charging and discharging circuit of FIG. 10. As shown in FIGS. 10 and 11, a step N1 is performed. In the step N1, the charging and discharging circuit 9 receives the power. The power is the AC power provided by the external wire 8. Then, a step N2 is performed. In the step N2, the charging and discharging circuit 9b is initialized. In this step, the AC/DC circuit board module 71 and the human machine interface circuit module 73 are initialized. Then, a step N3 is performed. In the step N3, the user transmits a communication feedback command to the AC/DC circuit board module 71 through the human machine interface circuit module 73. Then, a step N4 is performed. In the step N4, whether the AC/DC circuit board module 71 responds to the communication feedback command through the human machine interface circuit module 73 is confirmed. If the step N4 is not satisfied, it means that the AC/DC circuit board module 71 does not respond to the communication feedback command. Then, a step N5 is performed. In the step N5, the maximum output power of the AC/DC circuit board module 71 is controlled to be downward through the human machine interface circuit module 73. Then, the step N3 is performed again. If the step N4 is satisfied, it means that the AC/DC circuit board module 71 responds to the communication feedback command. Then, a step N6 is performed. In the step N6, whether the output voltage of the AC/DC circuit board module 71 is within the protect voltage range is confirmed. If the step N6 is satisfied, it means that the output voltage of the AC/DC circuit board module 71 is within the protect voltage range. Then, the step N3 is performed again. If the step N6 is not satisfied, it means that the output voltage of the AC/DC circuit board module 71 is not within the protect voltage range. Then, the step N5 is performed.

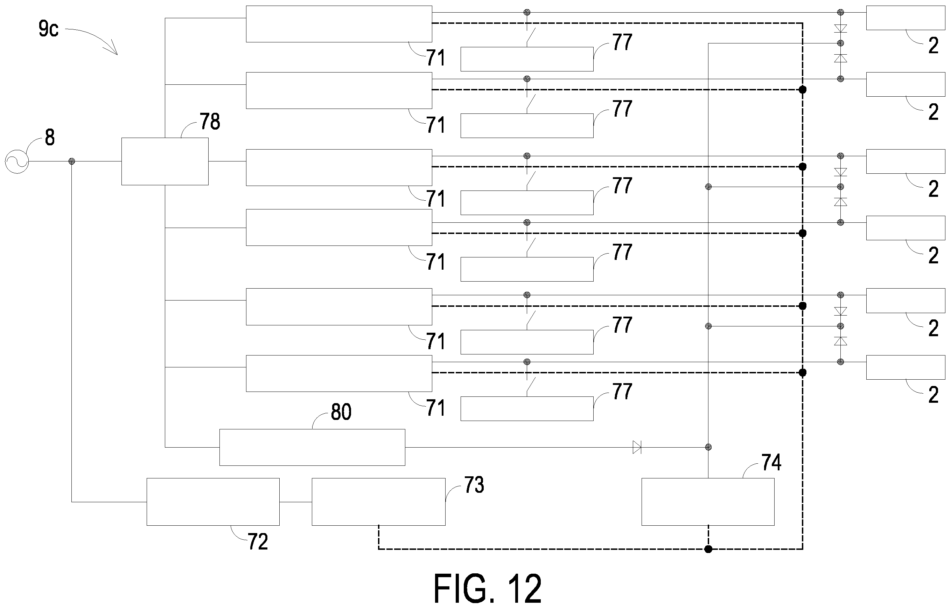

FIG. 12 is a schematic equivalent circuit diagram illustrating a charging and discharging circuit served as the battery charging chamber according to a fourth embodiment of the present disclosure. In the circuit structure, the charging and discharging circuit 9c of this embodiment includes a plurality of AC/DC circuit board module 71, a small power module 72, a human machine interface circuit module 73, a control circuit board module 74, a plurality of discharging loads 77, a distribution panel 78 and a control circuit conversion module 80. The distribution panel 78, the small power module 72, the human machine interface circuit module 73, the control circuit board module 74 and the plurality of discharging loads 77 of the charging and discharging circuit 9c of this embodiment are similar to the distribution panel 78, the small power module 72, the human machine interface circuit module 73, the control circuit board module 74 and the plurality of discharging loads 77 of the charging and discharging circuit 9a of FIG. 9, and are not redundantly described hereinafter. In this embodiment, the number of the AC/DC circuit board module 71 of the charging and discharging circuit 9c is six. Each AC/DC circuit board module 71 is connected between the distribution panel 78 and the corresponding battery 2 for transmitting the sub AC power provided by the distribution panel 78 to the corresponding battery 2. The rated power provided by each AC/DC circuit board module 71 is 110W. The control circuit conversion module 80 is connected between the distribution panel 78 and the control circuit board module 74. The control circuit conversion module 80 is also connected between the distribution panel 78 and the battery 2 for converting and transmitting the sub AC power of the distribution panel 78 to the control circuit board module 74 and/or the battery 2. The rated power provided by the control circuit conversion module 80 is 80W.

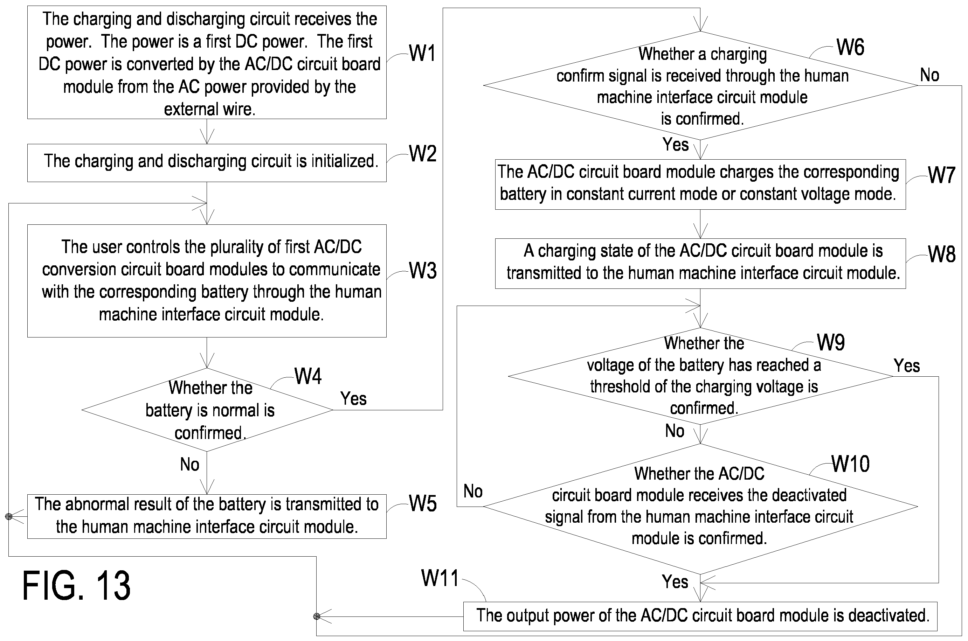

In this embodiment, the charging and discharging circuit 9c charges the battery 2 through the power converted by the AC/DC circuit board module 71. The control method will be described below. FIG. 13 is a flowchart illustrating a control method of the charging and discharging circuit of FIG. 12 when the charging and discharging circuit is charging. As shown in FIGS. 12 and 13, a step W1 is performed. In the step W1, the charging and discharging circuit 9c receives the power. The power is a first DC power. The first DC power is converted by the AC/DC circuit board module 71 from the AC power provided by the external wire 8. Then, a step W2 is performed. In the step W2, the charging and discharging circuit 9c is initialized. In this step, the AC/DC circuit board module 71 and the human machine interface circuit module 73 are initialized. Then, a step W3 is performed. In the step W3, the user controls the plurality of first AC/DC conversion circuit board modules 71 to communicate with the corresponding battery 2 through the human machine interface circuit module 73. Then, a step W4 is performed. In the step W4, whether the battery 2 is normal is confirmed. If the step W4 is not satisfied, it means that the battery 2 is abnormal. Then, a step W5 is performed. In the step W5, the abnormal result of the battery 2 is transmitted to the human machine interface circuit module 73. Then, the step W3 is performed again. If the step W4 is satisfied, it means that the battery 2 is normal. Then, a step W6 is performed. In the step W6, whether a charging confirm signal is received through the human machine interface circuit module 73 is confirmed. If the step W6 is satisfied, it means that the charging confirm signal is received through the human machine interface circuit module 73. Then, a step W7 is performed. In the step W7, the AC/DC circuit board module 71 charges the corresponding battery 2 in constant current mode or constant voltage mode. Then, a step W8 is performed. In the step W8, a charging state of the AC/DC circuit board module 71 is transmitted to the human machine interface circuit module 73. Then, a step W9 is performed. In the step W9, whether the voltage of the battery 2 has reached a threshold of the charging voltage is confirmed. Namely, whether the battery 2 is fully charged is confirmed. If the step W9 is not satisfied, it means that the voltage of the battery 2 has not reached the threshold of the charging voltage. Then, a step W10 is performed. In the step W10, whether the AC/DC circuit board module 71 receives the deactivated signal from the human machine interface circuit module 73 is confirmed. If the step W10 is not satisfied, it means that the AC/DC circuit board module 71 does not receive the deactivated signal from the human machine interface circuit module 73. Then, the step W9 is performed again. If the step W10 is satisfied, it means that the AC/DC circuit board module 71 receives the deactivated signal from the human machine interface circuit module 73. Then, a step W11 is performed. In the step W11, the output power of the AC/DC circuit board module 71 is deactivated. Then, the step W3 is performed again. If the step W9 is satisfied, it means that the voltage of the battery 2 has reached the threshold of the charging voltage. Then, the step W11 is performed. If the step W6 is not satisfied, it means that the charging confirm signal is not received through the human machine interface circuit module 73. Then, the step W3 is performed again.

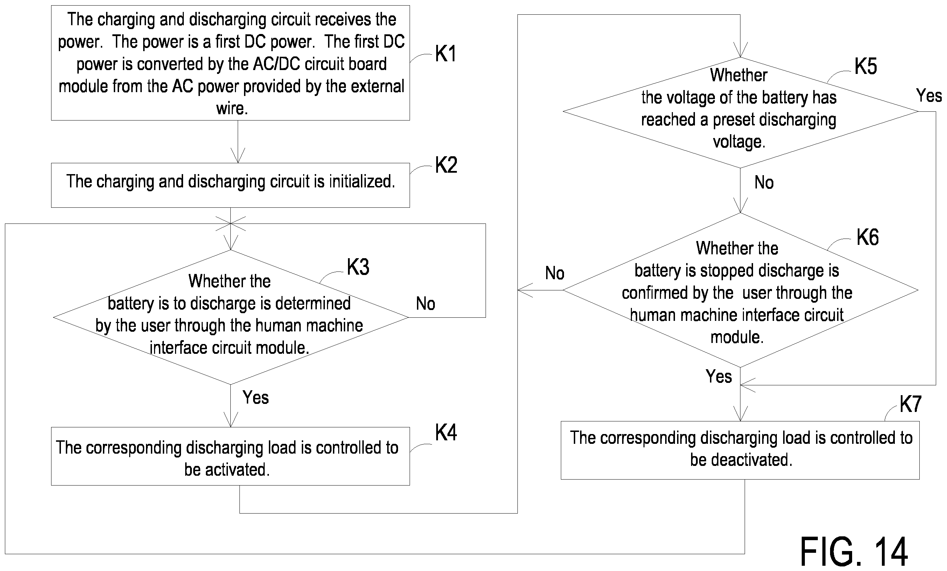

FIG. 14 is a flowchart illustrating a control method of a discharging load of the charging and discharging circuit of the present disclosure. As shown in FIGS. 12 and 14, a step K1 is performed. In the step K1, the charging and discharging circuit 9c receives the power. The power is a first DC power. The first DC power is converted by the AC/DC circuit board module 71 from the AC power provided by the external wire 8. Then, a step K2 is performed. In the step K2, the charging and discharging circuit 9c is initialized. In this step, the AC/DC circuit board module 71 and the human machine interface circuit module 73 are initialized. Then, a step K3 is performed. In the step K3, whether the battery 2 is to discharge is determined by the user through the human machine interface circuit module 73. If the step K3 is not satisfied, it means that the battery 2 is not to discharge. Then, the step K3 is performed again. If the step K3 is satisfied, it means that the battery 2 is to discharge. Then, a step K4 is performed. In the step K4, the corresponding discharging load 77 is controlled to be activated. Then, a step K5 is performed. In the step K5, whether the voltage of the battery 2 has reached a preset discharging voltage is confirmed. If the step K5 is not satisfied, it means that the voltage of the battery 2 has not reached a preset discharging voltage. Then, a step K6 is performed. In the step K6, whether the battery 2 is stopped to discharge is confirmed by the user through the human machine interface circuit module 73. If the step K6 is not satisfied, it means that the battery 2 is not stopped discharging. Then, the step K5 is performed again. If the step K6 is satisfied, it means that the battery 2 stops discharging. Then, a step K7 is performed. In the step K7, the corresponding discharging load 77 is controlled to be deactivated. Then, the step K3 is performed again. If the step K5 is satisfied, it means that the voltage of the battery 2 has reached a preset discharging voltage. Then, the step K7 is performed.

As mentioned above, according to the control method of the charging and discharging circuit of the present disclosure, when any one of the plurality of first DC/DC conversion circuit board modules is discharging, the operation of the discharging load is determined according to the charging requirement of the other first DC/DC conversion circuit board modules for consuming the power or recycling energy. Moreover, the charging and discharging circuit determines the charging method according to the charging state of the first DC/DC conversion circuit board and the battery. Namely, according to the control method of the charging and discharging circuit of the present disclosure, the charging state and the discharging state of the various batteries are controlled according to the various requirements for distributing the power of the various batteries. Moreover, the charging and discharging circuit of the present disclosure includes a distribution panel to enhance the heat dissipation efficiency.

## Claims

1. A control method of a charging and discharging circuit (9, 9a, 9b) for converting an AC power of an external wire (8) to charge a plurality of batteries (2), the charging and discharging circuit (9, 9a, 9b) comprising a plurality of AC/DC circuit board modules (71), a human machine interface circuit module (73), and a plurality of first DC/DC conversion circuit board modules (75), each first DC/DC conversion circuit board module (75) connected between the corresponding AC/DC circuit board module (71) and the corresponding battery (2), and **characterized in that** the control method comprises steps of:
(a) providing a distribution panel (78) for dividing the AC power into a plurality of sub AC powers and distributing the sub AC powers to the corresponding AC/DC circuit board modules (71);
(b) controlling the plurality of first DC/DC conversion circuit board modules (75) through the human machine interface circuit module (73) to convert a first DC power provided by the corresponding AC/DC circuit board module (71) into a charging power to charge the corresponding battery (2);
(c) confirming whether the first DC power provided by each AC/DC circuit board module (71) is within a preset voltage range;
(d) if the step (c) is not satisfied, transmitting an abnormal result to the human machine interface circuit module (73);
(e) if the step (c) is satisfied, controlling the corresponding first DC/DC conversion circuit board module (75) to communicate with the corresponding battery (2) through the human machine interface circuit module (73);
(f) confirming whether the battery (2) is normal;
(g) if the step (f) is not satisfied, transmitting an abnormal result to the human machine interface circuit module (73);
(h) if the step (f) is satisfied, charging the corresponding battery (2) by the corresponding first DC/DC conversion circuit board module (75) in constant current mode or constant voltage mode;
(i) transmitting a charging state of the corresponding first DC/DC conversion circuit board module (75) to the human machine interface circuit module (73);
(j) confirming whether a voltage of the battery (2) has reached a threshold of a charging voltage;
(k) if the step (j) is not satisfied, confirming whether the corresponding AC/DC circuit board module (71) receives a deactivated signal from the human machine interface circuit module (73); and
(l) if the step (k) is satisfied, deactivating an output power of the corresponding first DC/DC conversion circuit board module (75).

2. The control method according to claim 1, wherein after the step (d) is performed, then the step (b) is performed again; after the step (g) is performed, then the step (b) is performed again; and if the step (j) is satisfied, then the step (1) is performed.

3. A control method of a charging and discharging circuit (9, 9a, 9b) for converting a DC power of a plurality of batteries (2), the charging and discharging circuit (9, 9a, 9b) comprising a plurality of AC/DC circuit board modules (71), a human machine interface circuit module (73), a plurality of first DC/DC conversion circuit board modules (75) and a plurality of discharging loads (77), each first DC/DC conversion circuit board module (75) connected between the corresponding AC/DC circuit board module (71) and the corresponding battery (2), each discharging load (77) connected with a connection wire located between the corresponding AC/DC circuit board module (71) and the corresponding first DC/DC conversion circuit board, and **characterized in that** the control method comprises steps of:
(a) providing a distribution panel (78) for dividing an AC power of an external wire (8) into a plurality of sub AC powers and distributing the sub AC powers to the corresponding AC/DC circuit board modules (71);
(b) controlling a chosen first DC/DC conversion circuit board module (75) through the human machine interface circuit module (73) to convert the DC power provided by the corresponding battery (2) to a first DC power;
(c) controlling the chosen first DC/DC conversion circuit board module (75) through the human machine interface circuit module (73) to communicate with the corresponding battery (2) to confirm a discharging state;
(d) confirming whether a voltage of the battery (2) is within a preset voltage range;
(e) if the step (d) is not satisfied, transmitting an abnormal result to the human machine interface circuit module (73);
(f) if the step (d) is satisfied, continuously converting the DC power provided by the battery (2) to the first DC power by the chosen first DC/DC conversion circuit board module (75);
(g) confirming whether the first DC power converted by the first DC/DC conversion circuit module is within the preset voltage range;
(h) if the step (g) is satisfied, confirming whether the first DC/DC conversion circuit board module (75) is to charge the other batteries (2);
(i) if the step (h) is not satisfied, controlling the discharging load (77) to be activated, so that the first DC power converted by the first DC/DC conversion circuit board module (75) continuously supplied to the discharging load (77);
(j) confirming whether the voltage of the battery (2) has reached a preset discharging voltage;
(k) if the step (j) is not satisfied, confirming whether the chosen first DC/DC circuit module receives a deactivated signal from the human machine interface circuit module (73); and
(l) if the step (k) is satisfied, deactivating an output power of the first DC/DC conversion circuit board module (75).

4. The control method according to claim 3, wherein if the step (g) is not satisfied, then the step (e) is performed; if the step (h) is satisfied, the first DC/DC conversion circuit board module (75) is to charge the other batteries (2), and then the step (j) is performed; and if the step (j) is satisfied, then the step (1) is performed.

5. A charging and discharging circuit (9, 9a, 9b) for converting an AC power of an external wire (8) to charge a plurality of batteries (2) or converting a DC power of a plurality of batteries (2), **characterized in that** the charging and discharging circuit (9, 9a, 9b) comprises:
a distribution panel (78) configured to divide the AC power into a plurality of sub AC powers;
a plurality of AC/DC circuit board modules (71) connected with the distribution panel (78), and each of the plurality of AC/DC circuit board modules (71) receiving the corresponding sub AC power individually;
a plurality of first DC/DC conversion circuit board modules (75), and each of the plurality of first DC/DC conversion circuit board modules (75) connected between the corresponding AC/DC circuit board module (71) and the corresponding battery (2);
a human machine interface circuit module (73) configured to transmit instructions to order the first DC/DC conversion circuit board modules (75) to convert a first DC power provided by the corresponding AC/DC circuit board module (71) into a charging power to charge the corresponding battery (2), or order a chosen first DC/DC conversion circuit board module (75) to convert the DC power provided by the corresponding battery (2) to a first DC power;
a plurality of discharging loads (77), each of the plurality of discharging loads (77) is connected with a connection wire located between the corresponding AC/DC circuit board module (71) and the corresponding first DC/DC conversion circuit board module (75); and
a control circuit board module (74) receiving the first DC power provided by at least one of the plurality of AC/DC circuit board modules (71) and converting the first DC power to a required DC output power.

6. The charging and discharging circuit (9, 9a, 9b) according to claim 5, wherein each AC/DC circuit board module (71) is connected between the distribution panel (78) and the corresponding first DC/DC conversion circuit board module (75), the AC/DC circuit board module (71) is configured to convert the corresponding sub AC power into a DC power.

7. The charging and discharging circuit (9a) according to claim 5, wherein the charging and discharging circuit (9a) comprises a plurality of diodes (79), an anode of each diode (79) is connected with a wire located between the corresponding AC/DC circuit board module (71) and the corresponding first DC/DC conversion circuit board module (75), and a cathode of each diode (79) is connected with the control circuit board module (74).

8. The charging and discharging circuit (9, 9a, 9b) according to claim 5, wherein the charging and discharging circuit (9, 9a, 9b) comprises a small power module (72) and a plurality of second DC/DC conversion circuit board module (76), the small power module (72) is configured to receive and convert the AC power to a second DC power, one end of the second DC/DC conversion circuit board module (76) is connected with the small power module (72) and the human machine interface circuit module (73), the other end of the second DC/DC conversion circuit board module (76) is connected with the two corresponding batteries (2) for converting the second DC power or a power of the battery (2).

9. The charging and discharging circuit (9b) according to claim 5, wherein the plurality of AC/DC circuit board modules (71) and the plurality of first DC/DC conversion circuit board module (75) are also connected with each other through a communication wire.

## Amended claims

### Amended claims in accordance with Rule 137(2) EPC.

1. A charging and discharging circuit (9, 9a, 9b) for converting an AC power of an external wire (8) to charge a plurality of batteries (2) or converting a DC power of a plurality of batteries (2), the charging and discharging circuit (9, 9a, 9b) comprising:
a distribution panel (78) configured to divide the AC power into a plurality of sub AC powers;
a plurality of AC/DC circuit board modules (71) connected with the distribution panel (78), and each of the plurality of AC/DC circuit board modules (71) receiving the corresponding sub AC power individually;
a plurality of first DC/DC conversion circuit board modules (75), and each of the plurality of first DC/DC conversion circuit board modules (75) connected between the corresponding AC/DC circuit board module (71) and the corresponding battery (2);
a human machine interface circuit module (73) configured to transmit instructions to order the first DC/DC conversion circuit board modules (75) to convert a first DC power provided by the corresponding AC/DC circuit board module (71) into a charging power to charge the corresponding battery (2), or order a chosen first DC/DC conversion circuit board module (75) to convert the DC power provided by the corresponding battery (2) to a first DC power;
a plurality of discharging loads (77), wherein each of the plurality of discharging loads (77) is connected with a connection wire located between the corresponding AC/DC circuit board module (71) and the corresponding first DC/DC conversion circuit board module (75);
a control circuit board module (74) receiving the first DC power provided by at least one of the plurality of AC/DC circuit board modules (71) and converting the first DC power to a required DC output power;
**characterized by** a standby power module (72) configured to receive and convert the AC power to a second DC power; and
a plurality of second DC/DC conversion circuit board module (76), wherein one end of the second DC/DC conversion circuit board module (76) is connected with the standby power module (72) and the human machine interface circuit module (73), the other end of the second DC/DC conversion circuit board module (76) is connected with the two corresponding batteries (2) for converting a power of the battery (2).

2. The charging and discharging circuit (9, 9a, 9b) according to claim 1, wherein each AC/DC circuit board module (71) is connected between the distribution panel (78) and the corresponding first DC/DC conversion circuit board module (75), the AC/DC circuit board module (71) is configured to convert the corresponding sub AC power into a DC power.

3. The charging and discharging circuit (9a) according to claim 1, wherein the charging and discharging circuit (9a) comprises a plurality of diodes (79), an anode of each diode (79) is connected with a wire located between the corresponding AC/DC circuit board module (71) and the corresponding first DC/DC conversion circuit board module (75), and a cathode of each diode (79) is connected with the control circuit board module (74).

4. The charging and discharging circuit (9b) according to claim 1, wherein the plurality of AC/DC circuit board modules (71) and the plurality of first DC/DC conversion circuit board module (75) are also connected with each other through a communication wire.
